**Europäisches Patentamt**

**European Patent Office**

**Office européen des brevets**

(19)

(11) Veröffentlichungsnummer:

**0 025 566**
A2

# (12) EUROPÄISCHE PATENTANMELDUNG

(21) Anmeldenummer: **80105290.3**

(51) Int. Cl.³: **G 01 L 9/00**

(22) Anmeldetag: **04.09.80**

(30) Priorität: **17.09.79 DE 2937485**

(43) Veröffentlichungstag der Anmeldung: **25.03.81**
**Patentblatt 81/12**

(84) Benannte Vertragsstaaten: **AT BE CH FR GB IT LI LU NL SE**

(71) Anmelder: **SIEMENS AKTIENGESELLSCHAFT Berlin und München, Postfach 22 02 61, D-8000 München 22 (DE)**

(72) Erfinder: **Fromm, Ingrid, Dipl.-Phys, Jawlenskystrasse 10, D-8000 München 71 (DE)**

(54) **Optische Vorrichtung zum Messen geringer Druckdifferenzen mittels Lichtintensitätsänderung.**

(57) Die Erfindung geht von der Erkenntnis aus, daß die Auslenkung einer verspiegelten Membranoberfläche dazu benutzt werden kann, einen über geeignete optische Mittel zugeführten Lichtstrahl vorgegebener Intensität entsprechend dem gemessenen Druck derart abzulenken, daß die Intensität des wieder abzuführenden Lichts in Abhängigkeit von dem gemessenen Druck änderbar ist.

Es ist ein Meßkörper vorgesehen, in dem eine zumindest teilweise verspiegelte Membran derart eingespannt ist, daß sie mit ihrer verspiegelten Fläche in ihrer Ruhelage flächenparallel in einem Abstand, der geringfügig größer als eine zu erwartende Maximalauslenkung der Membran ist, zu einer Stirnfläche einer Gradientenlinse positioniert ist, und bei der die Gradientenlinse derart positioniert ist, daß diese Stirnfläche der Membran außermittig gegenüberliegt, so daß durch durch Druckeinwirkungen verursachte Durchbiegungen der Membran der Strahlengang eines über die andere Stirnfläche mittels Lichtwellenleiter als Eingangsfaser zugeführten Lichtes innerhalb der Gradientenlinse infolge des veränderten Einfallswinkels an der verspiegelten Fläche verschiebbar ist, so daß die Lichtintensität in einer Ausgangsfaser variabel ist.

SIEMENS AKTIENGESELLSCHAFT     Unser Zeichen
Berlin und München     VPA  79 P 7 1 6 8

**Optische Vorrichtung zum Messen geringer Druckdifferenzen mittels Lichtintensitätsänderung**

Die Erfindung betrifft eine optische Vorrichtung zum Messen geringer Druckdifferenzen mittels Lichtintensitätsänderung.

Das Messen von Druckdifferenzen erfolgte bisher im wesentlichen durch Manometer, bei denen die Auslenkung einer Membran unmittelbar dazu benutzt wird, eine Anzeigevorrichtung und/oder einen Regelmechanismus zu betätigen. Neben solchen jeweils mit einer Membran ausgestatteten Druck messenden Einrichtungen sind auch andere Druck messende Einrichtungen, wie beispielsweise solche nach dem piezokeramischen Prinzip arbeitende Einrichtungen bekannt. Den nach dem Prinzip der Membranbiegung arbeitenden Druck messenden Einrichtungen ist gemeinsam, daß sie auf Grund der unmittelbar mechanisch zu übertragenden Meßkraft hinsichtlich ihrer

Pap 1 The / 3.9.1979

Empfindlichkeit für einige bestimmte Anwendungsfälle nicht ausreichend sind.

Der vorliegenden Erfindung liegt die Aufgabe zugrunde, eine optische Vorrichtung zum Messen g e r i n g e r Druckdifferenzen zu schaffen, bei der ein unmittelbares Abtasten einer Meßkraft nicht erforderlich ist.

Die Erfindung geht von der Erkenntnis aus, daß die Auslenkung einer verspiegelten Membranoberfläche dazu benutzt werden kann, einen über geeignete optische Mittel zugeführten Lichtstrahl vorgegebener Intensität entsprechend dem gemessenen Druck derart abzulenken, daß die Intensität des wieder abzuführenden Lichts in Abhängigkeit von dem gemessenen Druck änderbar ist.

Die der Erfindung zugrundeliegende Aufgabe wird durch eine optische Vorrichtung zum Messen geringer Druckdifferenzen mittels Lichtintensitätsänderung gelöst, bei der eine Gradientenlinse mit einer Linsenlänge, die ein Viertel der Pitchlänge beträgt, vorgesehen ist, deren erster Stirnfläche über eine Eingangsfaser Speiselicht zuführbar und über eine Ausgangsfaser moduliertes Licht entnehmbar ist, bei der ein Meßkörper vorgesehen ist, in dem eine zumindest teilweise verspiegelte Membran derart eingespannt ist, daß sie mit ihrer verspiegelten Fläche in ihrer Ruhelage flächenparallel in einem Abstand, der geringfügig größer als eine zu erwartende Maximalauslenkung der Membran ist, zu der zweiten Stirnfläche der Gradientenlinse positioniert ist, und bei der die Gradientenlinse derart positioniert ist, daß ihre zweite Stirnfläche der Membran außermittig gegenüber liegt, so daß durch durch Druckeinwirkungen verursachte Durchbiegungen der Membran der Strahlengang des Speise-

lichts innerhalb der Gradientenlinse infolge des veränderten Einfallswinkels an ihrer verspiegelten Fläche in Bezug auf einen Bildpunkt auf der ersten Stirnfläche der Gradientenlinse, der bei der vorgegebenen Linsenlänge aus einem Ort einer durch die optische Achse der Eingangsfaser repräsentierten Punktlichtquelle gegeben ist, verschiebbar ist.

Die erfindungsgemäße Vorrichtung ist dadurch gekennzeichnet, daß zwischen der Membran und dem Meßkörper auf der der Gradientenlinse zugewandten Seite der Membran eine erste Kammer mit einem ersten Volumen und zwischen der Membran und einer Schutzkappe auf der der Gradientenlinse abgewandten Seite der Membran eine zweite Kammer mit einem zweiten Volumen vorgesehen sind, daß die erste Kammer mit einem druckdichten Verschluß gegenüber der Umgebung isolierbar ist, daß die Eingangsfaser an eine Lichtquelle vorgegebener Lichtleistung angeschlossen ist und daß die Ausgangsfaser mit einer die übertragene Lichtleistung bewertenden Meßeinrichtung verbunden ist.

Die Erfindung bietet den Vorteil, daß Druckdifferenzen geringer Größe meßbar sind. Darüber hinaus ist der Vorteil gegeben, daß relativ schnelle Druckänderungen auf Grund der geringen Massenträgheit der optischen Vorrichtung -die Membran ist das einzige bewegte Teil- gemessen werden können. Beispielsweise können vorteilhafterweise Schalldruckmessungen vorgenommen werden.

Weiterbildungen der Erfindung sind durch die in den Unteransprüchen angegebenen Merkmale gekennzeichnet.

Im folgenden wird die Erfindung an Hand mehrerer, ein Ausführungsbeispiel für die Erfindung betreffender Figuren erläutert.

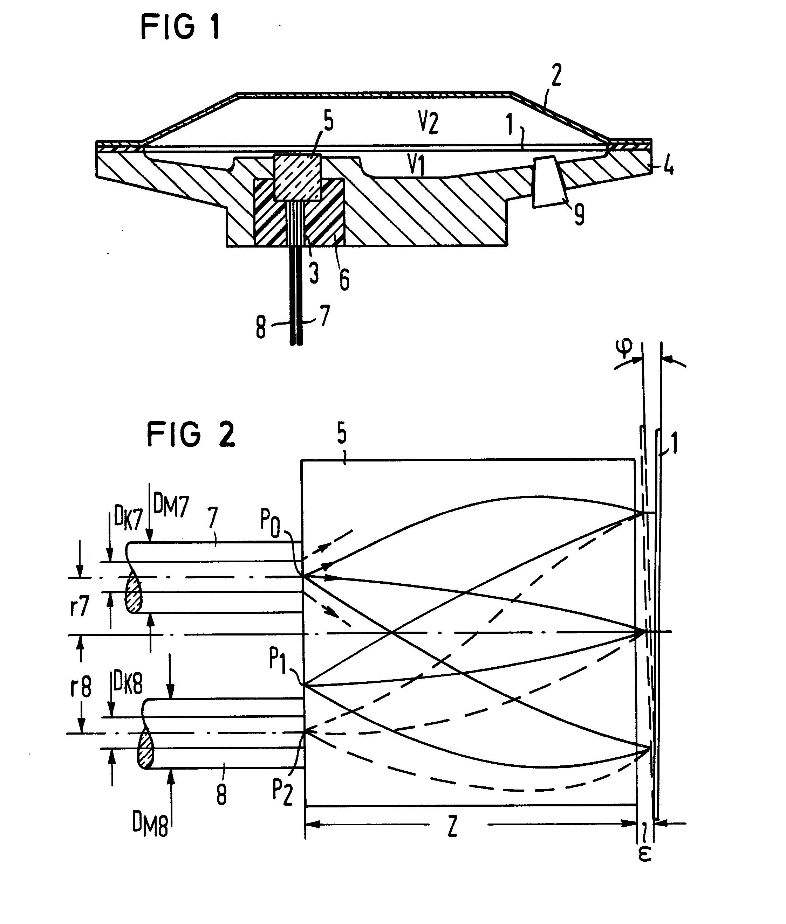

Figur 1 zeigt die Schnittzeichnung eines gemäß der Erfindung realisierten Ausführungsbeispiels für eine optische Vorrichtung zum Messen geringer Druckdifferenzen mittels Lichtintensitätsänderung. Figur 2 zeigt den für die Druckmessung wesentlichen optischen Teil einer solchen Vorrichtung.

Wie bereits angegeben, zeigt Figur 1 die Schnittzeichnung eines gemäß der Erfindung realisierten Ausführungsbeispiels für eine optische Vorrichtung zum Messen geringer Druckdifferenzen. Das über eine Eingangsfaser 7 ankommende unmodulierte Speiselicht gelangt über eine Gradientenlinse 5 auf eine durch Druck gebogene, auf der der Gradientenlinse 5 zugewandten Seite verspiegelte Membran 1. Die Membran 1 besteht beispielsweise aus einem dünnen, gespanntem Kunststoffhäutchen. Die vorzugsweise aufgedampfte Spiegelschicht, die als Reflektor wirkt, befindet sich wie die Gradientenlinse 5 am Ort maximaler Winkelauslenkung der Membran 1. Das reflektierte und damit durch die durch Druckeinwirkung in seiner Ausbreitungsrichtung variierte Licht gelangt wieder in die Gradientenlinse 5 und wird durch sie in eine Ausgangsfaser 8 eingekoppelt. Der entsprechend dem Druck variable Einkopplungsgrad ist dabei abhängig von der jeweiligen Spiegelauslenkung, was anschließend noch näher erläutert wird. Die Änderung der Ausbreitungsrichtung des Lichtes wird somit in eine Intensitätsänderung des wieder in einer Faser geführten Lichtes umgesetzt. Die Eingangsfaser 7 und die Ausgangsfaser 8 sind in einer Faserhalterung 6 mit der Gradientenlinse 5 verbunden. 3 bezeichnet z.B. einen optischen
Kleber. Die Fasern müssen in definierter Lage mit sehr
engen Toleranzen in Bezug auf den Abstand der Faserachsen zueinander und den Abstand der Faserachsen zur
Linsenachse justiert sein. Diese Justierung kann z.B.
mit Hilfe von Führungsnuten vorgenommen werden, die in
der Faserhalterung 6 angebracht sind. Für die Herstellung solcher Führungsnuten existieren verschiedene bekannte Techniken, z.B. das Vorzugsätzen in Silizium.
Das Membran-Material kann "Kapton" oder Teflon" sein.
Bei dem gezeigten Ausführungsbeispiel für die Erfindung ist im übrigen eine Schutzkappe 2 vorgesehen, die
die Membran vor störenden Einwirkungen schützt.

Figur 2 zeigt, wie bereits erwähnt, den für die Druckmessung wesentlichen optischen Teil einer erfindungsgemäßen Vorrichtung. Es ist gezeigt, wie das in der
Eingangsfaser 7 geführte Licht an der Stoßstelle Faser-
Gradientenline in einem Bereich vom Eingangsfaser-Kerndurchmesser $D_{K7}$ um einen Ort $P_0$ in die Gradientenlinse 5
eintritt. Die Linsenlänge Z der Gradientenlinse wird
zu $Z = Z_0/4$ gewählt. $Z_0 = 2 \pi / \sqrt{A}$ ist dabei die sog.
Pitchlänge. A ist eine Konstante. Mit dieser Linsenlänge Z wird das Licht einer Punktlichtquelle am Ort $P_0$
in einen Parallelstrahl an der gegenüberliegenden Stirnfläche der Gradientenlinse transformiert. In einem geringen Abstand $\varepsilon$ in Ruhelage von dieser ebenen Stirnfläche ist die Membran 1 im Bereich maximaler Winkelauslenkung angebracht. Der Abstand $\varepsilon$ soll nur geringfügig größer als die bei einer auftretenden Maximalauslenkung $\varphi_{max}$ in Richtung Z eintretende Verschiebung
der Membran 1 sein. Mit $P_1$ ist in Figur 2 der Bildpunkt
von $P_0$ für die Ruhelage bezeichnet. $P_2$ bezeichnet den

Durchstoßpunkt der Achse der Ausgangsfaser 8 in der Kontaktebene der beiden Stirnflächen. Die Lage von $P_2$ kann, wie in Figur 2 gezeigt oder hiervon verschieden gewählt werden. Ebenso können die Kerndurchmesser $D_{K7}$ und $D_{K8}$, die Manteldurchmesser $D_{M7}$ und $D_{M8}$ sowie die Achsabstände $r_7$ und $r_8$ der Faserachsen von der Linsenachse gleich oder verschieden gewählt werden.

Um durch eine Auslenkung $\varphi$ eine möglichst große Verschiebung des Bildespunktes $P_1$ hervorzurufen, ist die Pitchlänge $Z_0$ groß zu wählen, denn zwischen den Koordinaten des Punktes $P_0$ ($x = r_7$) und seines Bildpunktes $P_1$ ($x'$) besteht die Beziehung $x' = -x + \varphi/(n_0 \sqrt{A}) = -x + \varphi Z_0/(2 \pi n_0)$. Die Winkel $\alpha$ der bei $P_0$ eintretenden Strahlen werden im Fall $Z = Z_0/4$ transformiert in $\alpha' = -\alpha$. $n_0$ bedeutet den Brechungsindex auf der Achse der Gradientenlinse. Mit $n_0 = 1,616$ und $Z_0 = 20,8$ mm (Werte für einen kommerziellen Linsentyp) gehört zu einer Verschiebung $\Delta x = 100 \mu m$ eine Winkelauslenkung $\varphi = 2,8^\circ$.

Die Ausgangsfaser 8 kann vorteilhafterweise mit einem um den Eingangsfaser- bzw. Ausgangsfaserkerndurchmesser $D_{K7}$ bzw. $D_{K8}$ vergrößerten Achsabstand von der Achse der Gradientenlinse 5 positioniert sein.

Eine Weiterbildung der Erfindung sieht vor, daß der Ausgangsfaserkerndurchmesser $D_{K8}$ größer als der Eingangsfaser-Kerndurchmesser $D_{K7}$ ist, daß zwischen der ersten Stirnfläche der Gradientenlinse 5 und der betreffenden Stirnfläche der Ausgangsfaser 8 eine Blende angeordnet ist, deren Blendendurchmesser gleich oder größer als der Eingangsfaser-Kerndurchmesser $D_{K7}$ ist, und daß die Blende derart positioniert ist, daß der Bildpunkt $P_1$ in

der Ruhelage der Membran 1 abgedeckt ist.

Der Ausgangsfaser-Kerndurchmesser $D_{K8}$ wird vorteilhafterweise so groß gewählt, daß bei einer Auslenkung durch einen maximalen Druck der Bildbereich des Kernes der Eingangsfaser 7 noch im Bereich des Kernes der Ausgangsfaser 8 liegt. Die Ausgangsfaser 8 wird vorteilhafterweise derart positioniert, daß die Grenzfläche zwischen ihrem Kern und ihrem Mantel durch den Bildpunkt $P_1$ verläuft.

Ein weiteres, nicht gezeigtes Ausführungsbeispiel sieht vor, daß die Ausgangsfaser 8 durch ein aus mehreren Bündelfasern zusammengesetztes Faserbündel ersetzt ist.

Außer den bereits genannten Werkstoffen für die Membran "Kapton" oder "Teflon" kann vorteilhafterweise auch der Werkstoff "Hostaphan" verwendet werden. Dieser Werkstoff hat ebenfalls, wie die beiden zuvor genannten Werkstoffe, für den erfindungsgemäßen Verwendungszweck ausreichende technische Werte.

Zum Messen der Druckdifferenz zwischen zwei Volumina kann die erfindungsgemäße Vorrichtung mit ihrem Meßkörper 4 druckdicht in einer Trennwand zwischen den beiden Volumina befestigt werden, wobei der druckdichte Verschluß 9 entfernt ist, so daß ein Messen der Druckdifferenz der beiden Volumina ermöglicht ist.

Ebenso ist die Verwendung der erfindungsgemäßen optischen Vorrichtung als reine Drucksonde möglich. Dazu wird die erste Kammer $V_1$ mit einem unter einem Referenzdruck stehenden Hilfsmedium gefüllt, wobei die erste

Kammer $V_1$ mittels des druckdichten Verschlusses 9 gegenüber der Umgebung isoliert ist, so daß ein Messen der Differenz zwischen dem Referenzdruck und dem Umgebungsdruck ermöglicht ist.

Als Lichtquelle zum Einspeisen einer Lichtleistung in die Eingangsfaser 7 kann vorteilhafterweise eine lichtemittierende Diode (LED) verwendet werden. Des weiteren kann vorteilhafterweise als Lichtquelle eine Laserdiode (LD) verwendet werden.

Die erfindungsgemäße optische Vorrichtung erlaubt das Messen extrem geringer Druckänderungen. Zur Abschätzung der Empfindlichkeit kann von der statischen Biegelinie einer fest eingespannten Membran ausgegangen werden.

Der Anteil des wiedereingekoppelten Lichtes hängt von der Winkelauslenkung der Membran an der Stelle der Reflexion ab. Für die maximale Winkelauslenkung $\varphi_{max}$ ergibt sich:

$$tg\,\varphi_{max} = \frac{1}{2\sqrt{3}} \cdot \frac{p \cdot a^3 (1-\chi^2)}{E \cdot h^3}$$

p     Druck

a     Membranradius

$\chi$     Poissonzahl

h     Membrandicke

E     Elastizitätsmodul

Aus dieser Gleichung ergibt sich z.B. für eine 14 μm dicke Kapton-Membran mit 20 mm Radius, daß eine Druckänderung von 1 bar eine Auslenkung des reflektierten Lichtes über den gesamten Faserradius von ca. 50 μm zur Folge hat.

Durch Verwendung dünnerer Membranen oder Vergrößerung ihres Durchmessers kann die Empfindlichkeit noch erhöht werden.

Der zunächst als gering erscheinende Dynamikbereich der Druckmessung -Druckänderungen können nur verfolgt werden, solange das Licht nicht vollständig neben die abgehende Faser reflektiert wird- erscheint zunächst von Nachteil. Dieser Umstand kann jedoch dadurch leicht umgangen werden, daß entweder die Membran unempfindlicher gewählt wird oder durch Druckausgleich zwischen der ersten Kammer $V_1$ und der zweiten Kammer $V_2$ jeweils von einer neuen, fiktiven Nullstellung ausgegangen wird.

18 Patentansprüche
2 Figuren

Patentansprüche

1. Optische Vorrichtung zum Messen geringer Druckdifferenzen mittels Lichtintensitätsänderung, bei der eine Gradientenlinse mit einer Linsenlänge, die ein Viertel der Pitchlänge beträgt, vorgesehen ist, deren erster Stirnfläche über eine Eingangsfaser Licht zuführbar und über eine Ausgangsfaser ein Teil des zurückgekehrten Lichtes entnehmbar ist, bei der ein Meßkörper vorgesehen ist, in dem eine zumindest teilweise verspiegelte Membran derart eingespannt ist, daß sie mit ihrer verspiegelten Fläche in ihrer Ruhelage flächenparallel in einem Abstand, der geringfügig größer als eine zu erwartende Maximalauslenkung der Membran ist, zu der zweiten Stirnfläche der Gradientenlinse positioniert ist, und bei der die Gradientenlinse derart positioniert ist, daß ihre zweite Stirnfläche der Membran außermittig gegenüberliegt, so daß durch durch Druckeinwirkungen verursachte Durchbiegungen der Membran der Strahlengang des Lichtes innerhalb der Gradientenlinse infolge des veränderten Einfallswinkels an ihrer verspiegelten Fläche in Bezug auf einen Bildpunkt auf der ersten Stirnfläche der Gradientenlinse, der bei der vorgegebenen Linsenlänge aus einem Ort einer durch die optische Achse der Eingangsfaser repräsentierten Punktlichtquelle gegeben ist, verschiebbar ist, dadurch g e k e n n z e i c h n e t , daß zwischen der Membran (1) und dem Meßkörper (4) auf der der Gradientenlinse (5) zugewandten Seite der Membran (1) eine erste Kammer ($V_1$) mit einem ersten Volumen und zwischen der Membran (1) und einer Schutzkappe (2) auf der der Gradientenlinse (5) abgewandten Seite der Membran (1) eine zweite Kammer ($V_2$) mit einem zweiten Volumen vorgesehen sind, daß die erste Kammer ($V_1$) mit einem druckdichten Verschluß (9) gegenüber der Umgebung isolierbar ist, daß die Eingangsfaser (7) an eine Lichtquelle vorgegebener Lichtleistung angeschlossen ist
und daß die Ausgangsfaser (8) mit einer die übertragene Lichtleistung bewertenden Meßeinrichtung verbunden ist.

2. Optische Vorrichtung nach Anspruch 1, dadurch
g e k e n n z e i c h n e t  , daß die Pitchlänge so
groß zu wählen ist, daß eine der Fasergeometrie und dem
Faserabstand angepaßte Bildpunktverschiebung erzielbar
ist.

3. Optische Vorrichtung nach Anspruch 1, dadurch
g e k e n n z e i c h n e t  , daß die Gradientenlinse (5) an dem Ort angeordnet ist, an dem die maximalen Membranhübe auftreten und daß die Membran (1) derart dimensioniert ist und eingespannt ist, daß durch den
Druck die größtmögliche Auslenkung ( $\varphi$ ) auftritt.

4. Optische Vorrichtung nach Anspruch 1, dadurch
g e k e n n z e i c h n e t  , daß die Gradientenlinse (5) verschiebbar angeordnet ist, so daß sie je
nach geforderter Empfindlichkeit der Druckmessung Orten
unterschiedlicher Membranhübe gegenüberliegen kann.

5. Optische Vorrichtung nach Anspruch 1, dadurch
g e k e n n z e i c h n e t  , daß in dem Meßkörper (4)
eine Faserhalterung (6) angeordnet ist, die mit einem
Befestigungsmittel, vorzugsweise einem optischen Kleber
(3), fixiert ist, und daß die Faserhalterung (6) Führungsnuten aufweist, mittels derer die Eingangsfaser (7)
und die Ausgangsfaser (8) in einem vorgegebenen Ein-
gangsfaser-Achsabstand ($r_7$) bzw. einem vorgegebenen Aus-
gangsfaser-Achsabstand ($r_8$) von der Achse der Gradientenlinse (5) gehalten werden.

6. Optische Vorrichtung nach einem der vorhergehenden Ansprüche, dadurch g e k e n n z e i c h n e t , daß der Eingangsfaser-Kerndurchmesser ($D_{K7}$) und der Ausgangsfaser-Kerndurchmesser ($D_{K8}$) gleich sind, daß der Eingangsfaser-Manteldurchmesser ($D_{M7}$) und der Ausgangsfaser-Manteldurchmesser ($D_{M8}$) gleich sind und daß der Ausgangsfaser-Achsabstand ($r_8$) so gewählt ist, daß ein durch die optische Achse der Ausgangsfaser (8) gegebener Durchstoßpunkt ($P_2$) mit dem durch die Ruhelage der Membran (1) und dem durch die Lage der optischen Achse der Eingangsfaser (7) vorgegebenen Ort ($P_0$) bestimmten Bildpunkt ($P_1$) identisch ist.

7. Optische Vorrichtung nach Anspruch 6, dadurch g e k e n n z e i c h n e t , daß die Ausgangsfaser (8) mit einem um den Eingangsfaser-bzw. Ausgangsfaser-Kerndurchmesser ($D_{K7}$) bzw. ($D_{K8}$) vergrößerten Achsabstand von der Achse der Gradientenlinse (5) positioniert ist.

8. Optische Vorrichtung nach einem der Ansprüche 1 bis 5, dadurch g e k e n n z e i c h n e t , daß der Ausgangsfaser-Kerndurchmesser ($D_{K8}$) größer als der Eingangsfaser-Kerndurchmesser ($D_{K7}$) ist, daß zwischen der ersten Stirnfläche der Gradientenlinse (5) und der betreffenden Stirnfläche der Ausgangsfaser (8) eine Blende angeordnet ist, deren Blendendurchmesser gleich oder größer als der Eingangsfaser-Kerndurchmesser ($D_{K7}$) ist, und daß die Blende derart positioniert ist, daß der Bildpunkt ($P_1$) in der Ruhelage der Membran (1) abgedeckt ist.

9. Optische Vorrichtung nach Anspruch 8, dadurch g e k e n n z e i c h n e t , daß der Ausgangsfaser-Kerndurchmesser ($D_{K8}$) so groß zu wählen ist, daß bei einer Auslenkung durch einen maximalen Druck der Bildbereich des Kernes der Eingangsfaser (7) noch im Bereich des Kernes der Ausgangsfaser (8) liegt.

10. Optische Vorrichtung nach einem der Ansprüche 1 bis 5, dadurch g e k e n n z e i c h n e t , daß der Eingangsfaser-Kerndurchmesser ($D_{K7}$) und der Ausgangsfaser-Kerndurchmesser ($D_{K8}$) gleich sind und daß die Ausgangsfaser (8) derart positioniert ist, daß die Grenzfläche zwischen ihrem Kern und ihrem Mantel durch den Bildpunkt ($P_1$) verläuft.

11. Optische Vorrichtung nach einem der Ansprüche 1 bis 5, dadurch g e k e n n z e i c h n e t , daß die Ausgangsfaser (8) durch ein aus mehreren Bündelfasern zusammengesetztes Faserbündel ersetzt ist.

12. Optische Vorrichtung nach Anspruch 1, dadurch g e k e n n z e i c h n e t , daß die Membran (1) aus einem Werkstoff, vorzugsweise "Kapton", mit einem Elastizitätsmodul $E \approx 3000 N/mm^2$ besteht und daß die Membran (1) einen Membranradius $a \approx 7,5 \ldots 25$ mm und eine Membrandicke $h \approx 4 \ldots 20 \mu$m hat.

13. Optische Vorrichtung nach Anspruch 1, dadurch g e k e n n z e i c h n e t , daß die Membran aus einem Werkstoff, vorzugsweise "Teflon", mit einem Elastizitätsmodul $E \approx 300 N/mm^2$ besteht und daß die Membran (1) einen Membranradius $a \approx 7,5 \ldots 25$ mm und eine Membrandicke $h \approx 4 \ldots 20 \mu$m hat.

14. Optische Vorrichtung nach Anspruch 1, dadurch g e k e n n z e i c h n e t , daß die Membran (1) aus einem Werkstoff, vorzugsweise "Hostaphan", mit einem Elastizitätsmodul E $\approx$ 4500 N/mm$^2$ besteht und daß die Membran (1) einen Membranradius a $\approx$ 7,5 ... 25 mm und eine Membrandicke h $\approx$ 4 ... 20 µm hat.

15. Optische Vorrichtung nach einem der vorhergehenden Ansprüche, dadurch g e k e n n z e i c h n e t , daß der Meßkörper (4) druckdicht in einer Trennwand zwischen zwei Volumina befestigt ist und daß der druckdichte Verschluß (9) entfernt ist, so daß ein Messen der Druckdifferenz der beiden Volumina ermöglicht ist.

16. Optische Vorrichtung nach einem der Ansprüche 1 bis 14, dadurch g e k e n n z e i c h n e t , daß das erste Volumen ($V_1$) mit einem unter einem Referenzdruck stehenden Hilfsmedium gefüllt ist und daß das erste Volumen ($V_1$) mittels des druckdichten Verschlusses (9) gegenüber der Umgebung isoliert ist, so daß ein Messen der Differenz zwischen dem Referenzdruck und dem Umgebungsdruck ermöglicht ist.

17. Optische Vorrichtung nach einem der vorhergehenden Ansprüche, dadurch g e k e n n z e i c h n e t , daß als Lichtquelle eine lichtemittierende Diode (LED) vorgesehen ist.

18. Optische Vorrichtung nach einem der Ansprüche 1 bis 16, dadurch g e k e n n z e i c h n e t , daß als Lichtquelle eine Laserdiode (LD) vorgesehen ist.

FIG 1

FIG 2